# EUROPÄISCHE PATENTANMELDUNG

(11) **EP 3 984 979 A2**
(43) Veröffentlichungstag der Anmeldung: **20.04.2022**
(21) Anmeldenummer: 21214137.8
(22) Anmeldetag: 30.01.2019
(51) Int. Cl.: C04B 35/56, C04B 35/565, C04B 35/626, C04B 35/634, C04B 41/00, C01B 32/914, C04B 41/50, C04B 41/87, C09D 1/00, C09D 7/61, C09D 7/40

(54) **WÄSSRIGE SUSPENSION ENTHALTEND METALLCARBID-PARTIKEL**

(30) Priorität: 06.02.2018 DE 102018201771
(62) Teilanmeldung aus: 19703658.5
(71) Anmelder: Fraunhofer-Gesellschaft zur Förderung der angewandten Forschung e.V., 80686 München (DE)
(72) Erfinder: SCHWANKE, Stanislaus, 91058 Erlangen (DE); MÜLLER, Stephan, 91058 Erlangen (DE); MEISSNER, Elke, 91058 Erlangen (DE); EPELBAUM, Boris, 91058 Erlangen (DE); REIMANN, Christian, 91058 Erlangen (DE); FRIEDRICH, Jochen, 91058 Erlangen (DE); BECKER, Lucas, 91058 Erlangen (DE)
(74) Vertreter: Pfenning, Meinig & Partner mbB

(57) **Zusammenfassung**

Die vorliegende Erfindung betrifft wässrige Suspensionen enthaltend Metallcarbid-Partikel und Dispergierungsmittel, wobei der Anteil des mindestens einen Metallcarbid-Partikels im Bereich von 30 bis 95 Gew.-% bezogen auf das Gesamtgewicht der Suspension liegt, sowie ein Verfahren zur Beschichtung von Substraten unter Verwendung dieser wässrigen Suspensionen. Weiterhin betrifft die Erfindung die über das erfindungsgemäße Verfahren herstellbaren beschichteten Substrate und deren Verwendungen. Das Verfahren enthält die Schritte:

Bereitstellen eines Substrats;

ii) Bereitstellen einer wässrigen Suspension enthaltend Metallcarbid-Partikel und Dispergierungsmittel;

iii) Aufbringen der Suspension aus Schritt ii) auf die Oberfläche des Substrats aus Schritt i);

iv) Trocknung der aufgebrachten Suspension, wonach eine Beschichtung auf der Oberfläche des Substrats entsteht.

## Beschreibung

Die vorliegende Erfindung betrifft wässrige Suspensionen enthaltend Metallcarbid-Partikel und Dispergierungsmittel sowie ein Verfahren zur Beschichtung von Substraten unter Verwendung dieser wässrigen Suspensionen. Weiterhin betrifft die Erfindung die über das erfindungsgemäße Verfahren herstellbaren beschichteten Substrate und deren Verwendungen.

Hochschmelzende Metallcarbide wie beispielsweise Titan-, Zirconium-, Hafnium-, Vanadium-, Niob-, Tantal-, Chrom-, Molybdän-, Wolfram- und Siliziumcarbid zeichnen sich durch ihre hohe mechanische, chemische und thermische Beständigkeit aus. Deshalb werden solche carbidischen Werkstoffe in Form von massiven, keramischen Körpern oder in Form von Beschichtungen vielfältig eingesetzt. So finden die carbidischen Werkstoffe Anwendung bei der Herstellung von Materialien bei hohen Temperaturen und/oder in chemisch aggressiven Umgebungen, bei der Herstellung von Schneidwerkzeugen oder auch Triebwerksdüsen und in der Kristallzüchtung.

Aufgrund ihrer mechanischen Härte sind die Metallcarbide jedoch schwer zu verarbeiten. Deshalb sind massive Formkörper mit komplexeren Geometrien aus diesen Materialien nicht oder nur schwierig und kostenintensiv herzustellen. Aus diesem Grund werden Bauteile meist mit den Metallcarbiden nur beschichtet.

Häufig eingesetzte Beschichtungsverfahren sind das CVD-Verfahren (Chemical Vapor Deposition) und PVD-Verfahren (Physical Vapor Deposition). Jedoch sind die über diese Verfahren erhältlichen Beschichtungen in der Regel nur maximal wenige Mikrometer dick, was aufgrund mangelnder Langzeitstabilität für bestimmte Anwendungen - wie zum Beispiel bei der Herstellung von Siliziumcarbid- oder Aluminiumnitrid-Kristallen - nicht ausreichend ist.

Im Stand der Technik sind auch metallcarbidische Beschichtungen beschrieben, die über einen nasskeramischen Prozess hergestellt werden, bei dem eine organische Suspension aus Metallcarbid-Partikeln auf die zu beschichtenden Bauteile durch Streichen, Sprühen oder Tauchen aufgebracht wird, wonach ein Sinterprozess erfolgt.

US 2013/0061800 A1 beschreibt ein hochtemperaturstabiles Element, welches ein Graphitsubstrat beinhaltet dieses enthält isotropen Graphit. Außerdem umfasst das hochtemperaturstabile Element eine Carbidbeschichtung, welche ein Carbid, so wie Tantalcarbid, beinhaltet. Weiterhin werden Verfahren zur Herstellung dieses Elements beschrieben, bei denen die Carbidpartikel aus einer Suspension auf dem Substrat abgeschieden werden. Dabei werden Suspensionen mit einem organischen Lösungsmittel als flüssige Phase verwendet.

Nasskeramische Verfahren zur Beschichtung von Graphit mit Tantalcarbid werden auch von D. Nakamura, T. Kimura, T. Narita, A. Suzumura, T. Kimoto und K. Nakshima im Journal of Crystal Growth, Vol. 478, 2017 auf den Seiten 163 bis 173 sowie von D. Nakamura, K. Shigetoh und von A. Suzumura im Journal of the European Ceramic Society, Vol. 37, 2017 auf den Seiten 1175 bis 1185 beschrieben. In den offenbarten Verfahren erfolgt die Abscheidung von Tantalcarbid aus Suspensionen, die auf organischen Lösungsmitteln basieren.

Über die aus dem Stand der Technik bekannten nasskeramischen Verfahren lassen sich relativ dicke Schichten erzeugen, die Schichtdicken von teilweise mehreren 100 Mikrometern aufweisen. Im Gegensatz zu den über CVD- oder PVD-Verfahren hergestellten Schichten, zeigen die über nasskeramische Verfahren hergestellten Schichten eine isotrope Textur mit zufälliger Korngrößenorientierung, was zu einer verminderten Anfälligkeit für Rissbildung und zu einer Erhöhung des Diffusionswegs für substratschädigende Spezies führt.

Suspensionen basierend auf organischen Lösungsmitteln weisen jedoch wesentliche Nachteile auf. Neben ökologischen und gesundheitlichen Aspekten - aufgrund der Toxizität der organischen Lösungsmittel - bringt der Einsatz dieser Suspensionen zusätzlich das sicherheitstechnische Problem leicht entflammbarer Sprühnebel mit sich. Außerdem müssen die organischen Lösemittel zur Entfernung pyrolisert werden. Dies führt zum ungewünschten Eintrag von Fremdstoffen in die Beschichtung. Weiterhin ist aus den bekannten Suspensionen kein kontrollierter Auftrag der Suspension möglich, dies gilt insbesondere für Sprühverfahren, da die Suspensionseigenschaften während dieses Vorgangs durch Verdampfung des Lösemittels schwanken können, so dass über die Zeit keine homogenen Schichten erhalten werden können.

Es wäre weiterhin wünschenswert, das Verhältnis offener zu geschlossener Poren einer Carbidbeschichtung beeinflussen zu können, was durch die bekannten Suspensionen auf Basis organischer Lösungsmittel nur bedingt möglich ist. Außerdem ist es erstrebenswert, eine höhere Infiltrationstiefe der Beschichtung ausgehend von der Substratoberfläche erreichen zu können.

Ausgehend davon bestand die Aufgabe vorliegender Erfindung darin Suspensionen bereit zu stellen, die keine ökologischen, gesundheitlichen und sicherheitstechnischen Probleme mit sich bringen. Weiterhin sollen aus den Suspensionen Beschichtungen hergestellt werden können, die sehr rein sind und keinen Pyrolyseschritt erfordern. Außerdem sollen aus den bereitgestellten Suspensionen über die Zeit sehr homogene Schichten abgeschieden werden können und es soll möglich sein, das Verhältnis zwischen offenen und geschlossenen Poren einer aus der Suspension abgeschiedenen Beschichtung steuern zu können. Des Weiteren soll die Infiltrationstiefe einer aus der bereitgestellten Suspension abgeschiedenen Beschichtung ausgehend von der Oberfläche des zu beschichtenden Substrats erhöht werden. Außerdem sollen die Beschichtungen eine geringe Gasdurchlässigkeit aufweisen, einen hohen thermischen Schockwiderstand zeigen und stabil gegenüber einer chemisch aggressiven Atmosphäre sein.

Die ökologischen, gesundheitlichen und sicherheitstechnischen Probleme, die durch die Verwendung von Suspensionen mit organischen Lösungsmitteln als flüssige Phase resultieren, könnten sich durch Verwendung von Wasser als flüssige Phase ausräumen lassen.

Wasser wurde aber bislang aus einer Reihe von Gründen nicht als flüssige Phase für Metallcarbidsuspensionen in Betracht gezogen. Zum einen weisen Metallcarbide eine sehr hohe Dichte auf (Wolframcarbid 15,6 g/cm³, Tantalcarbid 13,9 g/cm³), wodurch eine sehr rasche Segregation auftritt. Um Schichten mit einer hohen Homogenität abzuscheiden, ist es aber zwingend erforderlich, dass die Metallcarbidpartikel in der Suspension in der Schwebe vorliegen.

Weiterhin ist für die benötigten hohen Feststoffanteile in einer wässrigen Suspension mit einer Agglomeration der Metallcarbidpartikel zu rechnen, was Risse und eine Reduktion der Gründichte in aus diesen Suspensionen abgeschiedenen Beschichtungen herbeiführt. Organische Lösungsmitteln hingegen vermögen eine Agglomeration - zumindest in gewissem Maße - über ihre funktionellen Gruppen zu unterdrücken.

Aufgabe der vorliegenden Erfindung ist es die oben genannten Probleme zu überwinden, die mit Wasser als flüssiger Phase auftreten.

Diese Aufgabe wird von der wässrigen Suspension mit den Merkmalen von Patentanspruch 1 gelöst, welche die folgenden technischen Merkmale aufweist.

Wässrige Suspension enthaltend
mindestens einen Metallcarbid-Partikel und
mindestens ein Dispergierungsmittel,
wobei der Anteil des mindestens einen Metallcarbid-Partikels im Bereich von 30 bis 95 Gew.-% bezogen auf das Gesamtgewicht der Suspension liegt.

Vorteilhafte Ausführungsformen der erfindungsgemäßen Suspension werden in den Patentansprüchen 2 bis 4 angegeben.

Die vorliegende Erfindung betrifft weiterhin nach Patentanspruch 5 ein Verfahren zur Beschichtung von Substraten unter Verwendung der erfindungsgemäßen wässrigen Suspension, welches die folgenden Schritte aufweist:
i) Bereitstellen eines Substrats;
ii) Bereitstellen einer wässrigen Suspension gemäß der vorliegenden Erfindung;
iii) Aufbringen der Suspension aus Schritt ii) auf die Oberfläche des Substrats aus Schritt i);
iv) Trocknung der aufgebrachten Suspension, wonach eine Beschichtung auf der Oberfläche des Substrats entsteht.

Vorteilhafte Ausführungsformen dieses Verfahrens werden in den Ansprüchen 6 bis 11 angegeben.

Weiterhin betrifft die vorliegende Erfindung gemäß Anspruch 12 und 13 über das erfindungsgemäße Verfahren herstellbare Substrate und die Ansprüche 14 und 15 geben Verwendungen dieser Substrate an.

### Begriffsdefinitionen

Bei einer "wässrigen Suspension" im Sinne der vorliegenden Erfindung wird als flüssige Phase Wasser verwendet. Dabei können bis zu 2 Gew.-%, bevorzugt bis zu 1 Gew.-% anderer Lösungsmittel anwesend sein. Besonders bevorzugt ist es aber, dass die flüssige Phase der "wässrigen Suspension" ausschließlich Wasser ist.

Unter der "mittleren Korngröße" gemäß der vorliegenden Erfindung wird der *d₅₀*-Wert verstanden, d.h. 50 % der Partikel weisen einen geringeren Partikeldurchmesser auf und die verbleibenden 50 % der Partikel zeigen einen größeren Partikeldurchmesser. Vorzugsweise wird die "mittlere Korngröße" durch Laserstreuung direkt an der Suspension bestimmt. Die Größe von Agglomeraten wird vorzugsweise durch Laserstreuung direkt an der Suspension ermittelt.

Unter der "Reinheit" der Metallcarbidpartikel bzw. der Beschichtung, die aus diesen Partikeln gebildet wird, wird die chemische Reinheit bezogen auf Einzelelementverunreinigungen verstanden. Die Reinheit wird vorzugsweise über GDMS (Glow Discharge Mass Spectrometry) bestimmt.

Unter der "Gründichte" der Beschichtung wird im Sinne der vorliegenden Erfindung die Dichte der hergestellten Schicht bezogen auf die theoretische Dichte einer gesinterten Metallcarbid-Schicht verstanden.

Das Carbid aus dem Halbmetall Silizium wird im Sinne vorliegender Erfindung zu den Metallcarbiden gezählt.

### Mengenangaben

Die wässrige Suspension gemäß vorliegender Erfindung enthält neben der flüssigen Phase Wasser auch mindestens einen Metallcarbidpartikel, mindestens ein Dispergiermittel und optional Zusatzstoffe. Die Mengenangaben beziehen sich jeweils auf das Gesamtgewicht der Suspension und die Gesamtmenge der anwesenden Komponenten ergänzt sich zu 100 Gew.-%

### Wässrige Suspension

Die wässrige Suspension gemäß der vorliegenden Erfindung enthält mindestens einen Metallcarbid-Partikel und mindestens ein Dispergierungsmittel, wobei der Anteil des mindestens einen Metallcarbid-Partikels im Bereich von 30 bis 95 Gew.-% bezogen auf das Gesamtgewicht der Suspension liegt. Der Anteil an Metallcarbid-Partikeln wird vorzugsweise durch Entfernen der flüchtigen Bestandteile aus der Suspension bestimmt, was vorzugsweise durch Erhitzen der Suspension auf eine Temperatur erfolgt, die oberhalb der Verdampfungstemperatur von Wasser liegt. Der Anteil der Metallcarbid-Partikel kann über die Einwaage festgelegt werden.

Im Folgenden werden bevorzugte Ausführungsformen der erfindungsgemäßen wässrigen Suspension angegeben.

Gemäß einer bevorzugten Ausführungsform der vorliegenden Erfindung ist der mindestens eine Metallcarbid-Partikel ausgewählt aus der Gruppe bestehend aus Titan-, Zirconium-, Hafnium-, Vanadium-, Niob-, Tantal-, Chrom-, Molybdän-, Wolfram-, Siliciumcarbid und Mischungen davon, wobei Tantalcarbid bevorzugt ist.

Dabei ist es bevorzugt, dass der mindestens eine Metallcarbid-Partikel eine mittlere Korngröße im Bereich von 0.05 bis 25 µm, besonders bevorzugt von 0.5 bis 5 µm und insbesondere bevorzugt von 1 bis 2 µm aufweist.

Weiterhin ist es bevorzugt, dass der mindestens eine Metallcarbid-Partikel einen Anteil von < 300 ppm, bevorzugt < 10 ppm und insbesondere bevorzugt von kleiner als 1 ppm an Einzelelementverunreinigungen aufweist. Sofern die Metallcarbid-Partikel nicht in ausreichender Reinheit kommerziell verfügbar sind, können diese über die dem Fachmann bekannten Verfahren, wie nasschemische Reinigung, gereinigt werden. Außerdem entspricht die Reinheit der aus einer wässrigen Suspension abgeschiedenen Beschichtung nicht zwingend der Reinheit der eingesetzten Metallcarbid-Partikel. Über das unten beschriebene erfindungsgemäße Verfahren ist ein Austrag von Verunreinigungen möglich.

Besonders bevorzugt ist es, dass der mindestens eine Metallcarbid-Partikel eine mittlere Korngröße im Bereich von 0.05 bis 25 µm, insbesondere bevorzugt von 0.5 bis 5 µm und ganz besonders bevorzugt von 1 bis 2 µm aufweist und einen Anteil von < 300 ppm, bevorzugt < 10 ppm und insbesondere bevorzugt von kleiner als 1 ppm an Einzelelementverunreinigungen aufweist.

Ein bevorzugtes Metallcarbid ist Tantalcarbid, welches insbesondere bevorzugt einen Phasenanteil der kubischen Phase von 70 bis 100 % aufweist.

Eine andere bevorzugte Ausführungsform sieht vor, dass das Dispergierungsmittel ausgewählt ist aus der Gruppe bestehend aus Polyacrylsäure, die bevorzugt ein zahlenmittleres Molekulargewicht im Bereich von 3000 bis 10000 g/mol und besonders bevorzugt von 4000 bis 6000 g/mol aufweist, Tetrabutylammoniumhydroxid und Mischungen davon.

Gemäß einer anderen bevorzugte Ausführungsform der vorliegenden Erfindung enthält diese zumindest einen Zusatzstoff, der bevorzugte ausgewählt ist aus der Gruppe bestehend aus Basen, insbesondere Natronlauge, Entschäumern, insbesondere Fettalkoholpolyalkylenglykolethern, Sinterhilfsmitteln, insbesondere Kobalt oder Silicium, und Mischungen davon. Besonders bevorzugte Zusatzstoffe sind dabei Entschäumer. Durch deren Einsatz wird Blasenbildung in der Suspension unterdrückt, was eine verringerte Rissbildung nach sich zieht.

Eine weitere bevorzugte Ausführungsform vorliegender Erfindung sieht vor, dass der Anteil der Metallcarbid-Partikel im Bereich von 40 bis 90 Gew.-% und bevorzugt von 60 bis 85 Gew.-% bezogen auf das Gesamtgewicht der Suspension liegt.

Eine andere bevorzugte Ausführungsform der vorliegenden Erfindung sieht vor, dass der Anteil des Dispergierungsmittels im Bereich von 0,05 bis 5 Gew.-% und bevorzugt von 0,1 bis 2 Gew.-% bezogen auf das Gesamtgewicht der Suspension liegt.

Nach einer weiteren bevorzugten Ausführungsform der vorliegenden Erfindung liegt der Anteil von Zusatzstoffen in der Suspension im Bereich von 0 bis 10 Gew.-% und bevorzugt von 0,5 bis 5 Gew.-% bezogen auf das Gesamtgewicht der Suspension.

Gemäß einer anderen bevorzugten Ausführungsform vorliegender Erfindung liegt der Anteil der Metallcarbid-Partikel im Bereich von 40 bis 90 Gew.-% und bevorzugt von 60 bis 85 Gew.-%, der Anteil des Dispergierungsmittels im Bereich von 0,05 bis 5 Gew.-% und bevorzugt von 0,1 bis 2 Gew.-% und der Anteil von Zusatzstoffen in der Suspension im Bereich von 0 bis 10 Gew.-% und bevorzugt von 0,5 bis 5 Gew.-% jeweils bezogen auf das Gesamtgewicht der Suspension.

Eine weitere bevorzugte Ausführungsform vorliegender Erfindung sieht vor, dass der pH-Wert der Suspension im Bereich von 5 bis 10 und bevorzugt von 7 bis 8 liegt. Wenn Polyacrylsäure als Dispergierungsmittel verwendet wird, liegt der pH-Wert bevorzugt im Bereich von 7 bis 8.

Gemäß einer weiteren bevorzugten Ausführungsform enthält die wässrige Suspension neben Wasser, Metallcarbidpartikeln, Dispergiermitteln und den oben angegebenen Zusatzstoffen keine weiteren Komponenten.

Nach einer weiteren bevorzugten Ausführungsform vorliegender Erfindung ist die wässrige Suspension vollkommen frei von organischen Lösemitteln.

### Verfahren

Das erfindungsgemäße Verfahren zur Beschichtung eines Substrats umfasst die folgenden Schritte:
i) Bereitstellen eines Substrats;
ii) Bereitstellen der erfindungsgemäßen wässrigen Suspension;
iii) Aufbringen der Suspension aus Schritt ii) auf die Oberfläche des Substrats aus Schritt i);
iv) Trocknung der aufgebrachten Suspension, wonach eine Beschichtung auf der Oberfläche des Substrats entsteht.

Im Folgenden werden bevorzugte Ausführungsformen des erfindungsgemäßen Verfahrens angegeben.

Nach einer bevorzugten Ausführungsform des Verfahrens gemäß vorliegender Erfindung ist das Substrat ausgewählt aus der Gruppe bestehend aus Graphit, Wärmeausdehnungskoeffizient angepassten Materialen, bevorzugt Graphit mit einem angepasstem Wärmeausdehungkoffezienten im Bereich von 6,5 bis 7,5 ^{∗} 10⁻⁶ K⁻¹ und Mischungen hiervon .

Eine weitere bevorzugte Ausführungsform des erfindungsgemäßen Verfahrens sieht vor, dass das Verfahren die folgenden weiteren Schritte enthält:
v) Vorbehandlung des in Schritt i) bereitgestellten Substrats vor Schritt iii), wobei die Vorbehandlung bevorzugt durch eine Maßnahme ausgewählt aus der Gruppe bestehend aus mechanischem Aufrauen der Oberfläche, thermischer Vorbehandlung der Oberfläche, chemischer Behandlung der Oberfläche und Mischungen davon, sowie anschließender Reinigung, insbesondere im Ultraschallbad, erfolgt;
vi) Sintern der nach Schritt iv) erhaltenen Beschichtung.

Um eine gute Haftung der Beschichtung auf dem Substrat zu erreichen, ist es besonders vorteilhaft das Substrat zunächst mechanisch aufzurauen und anschließend eine hydrophile Oberfläche durch entsprechende Reinigungsschritte im Ultraschallbad zu erzeugen. Insbesondere im Fall eines Graphitsubstrats ist auf eine Eliminierung oder zumindest eine Reduktion der Zahl loser Partikel auf der Oberfläche zu achten.

Nach einer anderen bevorzugten Ausführungsform erfolgt das Aufbringen der Suspension in Schritt iii) durch Pinseln, Tauchen oder Sprühen.

Bei der Sprühauftragung wird das Substrat bevorzugt mittig auf einem rotierbaren Drehtisch positioniert und mittels spezieller Halterungen fixiert. Je nach Geometrie des zu beschichtenden Substrats wird zusätzlich der Kippwinkel des Drehtisches und der Sprühwinkel der Sprühpistole mit einer dafür speziell vorgesehen Halterung angepasst. Unter fest definierten Sprühparametern (darunter dem Zerstäuberluftdruck, der Drosselung der Materialzufuhr über den Nadelhub sowie dem Abstand der Düsenöffnung zur Substratoberfläche) wird anschließend das Substrat mit der wässrigen Suspension beschichtet. Die Umdrehungszahl des Drehtisches während des Sprühvorganges orientiert sich dabei an der gewünschten Schichtdicke der späteren Beschichtung.

Gemäß einer weiteren bevorzugten Ausführungsform der vorliegenden Erfindung wird Schritt iv) bei einer Temperatur im Bereich von 100 bis 600°C, bevorzugt von 120 bis 550°C und besonders bevorzugt von 145 bis 455°C durchgeführt wird, wobei es bevorzugt ist, dass Schritt iv) über einen Zeitraum von 5 bis 40 Stunden und besonders bevorzugt von 20 bis 30 Stunden durchgeführt wird.

Um rissfreie Schichten zu erhalten, hat es sich als vorteilhaft erwiesen, die erhaltene Beschichtung in Schritt iv) über mehrere Temperaturschritte zu tempern. Dabei sind insbesondere Haltephasen bevorzugt, um ein zu rasches Trocknen mit der Folge von Rissbildung zu verhindern. Die spezifischen Haltephasen orientieren sich an dem Verdampfungsverhalten des verwendeten Dispergiermittels. Sofern Kobalt als Sinterhilfsmittel eingesetzt wird, ist es vorteilhaft den Trocknungsvorgang unter Inertgasatmosphäre durchzuführen.

Ein bevorzugter Trocknungsprozess iv) sieht die folgenden Temperatur- und Zeitintervalle vor:
(1) 140 bis 160°C für 2,5 bis 3,5 Stunden; dann
(2) 180 bis 220°C für 1,5 bis 2,5 Stunden; dann
(3) 2 Stunden verweilen bei der Temperatur aus (2); dann
(4) 200 bis 250°C für 1,5 bis 2,5 Stunden; dann
(5) 310 bis 350°C für 4,5 bis 5,5 Stunden; dann
(6) 330 bis 350°C für 1,5 bis 2,5 Stunden; dann
(7) 2 Stunden verweilen bei der Temperatur aus (6); dann
(8) 380 bis 420°C für 3,5 bis 4,5 Stunden; dann
(9) 430 bis 470°C für 1,5 bis 2,5 Stunden.

Gemäß einer anderen bevorzugten Ausführungsform der vorliegenden Erfindung wird Schritt vi) (= Sintern) bei einer Temperatur im Bereich von 2000 bis 2600°C, bevorzugt von 2100 bis 2500°C und besonders bevorzugt von 2200 bis 2300°C durchgeführt. Dabei ist es besonders bevorzugt, dass Schritt vi) über einen Zeitraum von 1 bis 10 Stunden und besonders bevorzugt von 3 bis 5 Stunden durchgeführt wird. Weiterhin ist es bevorzugt Schritt vi) bei einem Druck im Bereich von 500 bis 900 Torr, bevorzugt von 600 bis 800 Torr und insbesondere bevorzugt von 680 bis 720 Torr durchzuführen.

Nach einer anderen bevorzugten Ausführungsform der vorliegenden Erfindung wird Schritt vi) unter Inertgas durchgeführt wird, wobei das Inertgas besonders bevorzugt ausgewählt ist aus der Gruppe bestehend aus Helium, Argon, Stickstoff und Mischungen davon.

Die Zugabe von Sinterhilfsmitteln, wie Kobalt oder Silicium, erhöht das Flussverhalten beim Sinterprozess und die erreichbare Enddichte der Beschichtung.

Gemäß einer anderen bevorzugten Ausführungsform der vorliegenden Erfindung beträgt die Gründichte der Beschichtung vor Schritt v) mindestens 50 % und bevorzugt mindestens 60 %.

Eine weitere bevorzugte Ausführungsform sieht vor, dass die Beschichtung nach Schritt iv) oder vi) weniger als 300 ppm und bevorzugt weniger als 1 ppm an Einzelelementverunreinigungen enthält.

Gemäß einer anderen bevorzugten Ausführungsform weist die Beschichtung nach Schritt iv) oder vi) eine offene Porosität von kleiner 5 % und bevorzugt von kleiner 1 % auf. Diese wird bevorzugt über Hg-Porosimetrie bestimmt.

Gemäß einer anderen bevorzugten Ausführungsform vorliegender Erfindung liegt die Dicke der Beschichtung nach Schritt iv) oder vi) im Bereich von 20 bis 500 µm, bevorzugt von 50 bis 400 µm und besonders bevorzugt von bis 100 bis 300 µm.

Eine weitere bevorzugte Ausführungsform sieht vor, dass der pH-Wert der wässrigen Suspension vor Schritt iii) im Bereich von 5 bis 10 und bevorzugt von 7 bis 8, insbesondere für Polyacrylsäure als Dispergierungsmittel, liegt.

### Beschichtetes Substrat

Die vorliegende Erfindung betrifft weiterhin ein beschichtetes Substrat herstellbar gemäß dem erfindungsgemäßen Verfahren.

Nach einer bevorzugten Ausführungsform liegt die Dicke der Beschichtung im Bereich von 20 bis 500 µm, bevorzugt von 50 bis 400 µm und besonders bevorzugt von 100 bis 300 µm.

Eine weitere bevorzugte Ausführungsform sieht vor, dass die Beschichtung nach Schritt iv) oder vi) weniger als 300 ppm und bevorzugt weniger als 1 ppm Verunreinigung enthält.

Gemäß einer anderen bevorzugten Ausführungsform weist die Beschichtung nach Schritt iv) oder vi) eine offene Porosität von kleiner 5 % und bevorzugt von kleiner 1 % auf.

### Verwendung

Die beschichteten Substrate gemäß der vorliegenden Erfindung finden Verwendung als carbidische Werkstoffe.

Bevorzugt sind dabei die Verwendungen in Anwendungen für die Kristallzüchtung, insbesondere Anwendungen für PVT-Verfahren (physikalische Dampfphase-Verfahren), Epitaxie-Verfahren und für Tiegel.

Anhand der nachfolgenden Beispiele soll der erfindungsgemäße Gegenstand näher erläutert werden, ohne diesen auf die hier gezeigten spezifischen Ausführungsformen einschränken zu wollen.

### Herstellung der wässrigen Suspension 1

Mittels eines Dispergierrührwerks wurde eine wässrige Tantalcarbid Suspension hergestellt. Hierzu wurde das Tantalcarbid-Pulver (70 Gew.-%, Gesamtverunreinigungsgehalt: 300 ppm, H.C. Starck), Polyacrylsäure (0,5 Gew.-%, M_{w} 5000 g/mol, Polyscience Europe GmbH), Sinterhilfe (0,7 Gew.-% Silizium, H.C. Starck), Entschäumer (2 Tropfen Contraspum, Zschimmer und Schwarz) etappenweise in destilliertes Wasser (28.8 Gew.-%) gegeben. Zwischen der Zugabe jeder einzelnen Komponente wurde die Suspension mittels eines Rührwerks für bis zu 15 Minuten bei 4000 Umdrehungen pro Minute bearbeitet, um die homogene Verteilung des Metallcarbidpulvers, des Dispergiermittels bzw. der verwendeten Additive in der Suspension sicherzustellen. Der pH-Wert der Suspension wurde mit Natronlauge auf pH 8 eingestellt. Der Anteil an Tantalcarbid betrug 70 Gew.-% bezogen auf das Gesamtgewicht der wässrigen Suspension.

### Herstellung der wässrigen Suspension 2

Mittels eines Dispergierrührwerks wurde eine wässrige Tantalcarbid Suspension hergestellt. Hierzu wurde das Tantalcarbid-Pulver (70 Gew.-%, Gesamtverunreinigungsgehalt: 300 ppm, H.C. Starck, Tetrabutylammoniumhydroxid (0,5 Gew.-%, Sigma Aldrich), Sinterhilfe (0,7 Gew.-% Silizium, H.C. Starck), Entschäumer (2 Tropfen Contraspum, Zschimmer und Schwarz) etappenweise in destilliertes Wasser (28,8 Gew.-%) gegeben. Zwischen der Zugabe jeder einzelnen Komponente wurde die Suspension mittels eines Rührwerks für bis zu 15 Minuten bei 4000 Umdrehungen pro Minute bearbeitet, um die homogene Verteilung des Metallcarbidpulvers, des Dispergiermittels bzw. der verwendeten Additive in der Suspension sicherzustellen. Der pH-Wert der Suspension betrug 7. Der Anteil an Tantalcarbid betrug 70 Gew.-% bezogen auf das Gesamtgewicht der wässrigen Suspension.

Mit den wässrigen Suspensionen 1 und 2 wurde ein Graphitsubstrat beschichtet.

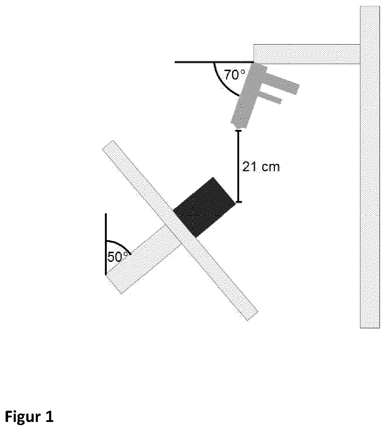

Die Beschichtung erfolgte an einem Beschichtungsstand mit einem rotier- und verkippbaren Probentisch mithilfe einer Sprühpistole. Die Sprühpistole wurde mit 2 bar Druckluft betrieben und wurde an einer Halterung angebracht, welche es erlaubt, sowohl den Winkel als auch den Abstand zur Probe zu variieren. Zur Beschichtung des Graphitsubstrates (in Figur 1 ist ein Graphitzylinder exemplarisch dargestellt) wurden ein Abstand von 19 cm und ein Einsprühwinkel von 90° gewählt. Die Innenseite des Graphit-Zylinders wurde aufgrund der zylindrischen Geometrie gemäß dem Aufbau nach Figur 1 beschichtet. Dazu wurde der Zylinder auf dem Rotationstisch fixiert und um 50° gekippt. Die Pistolenmündung befand sich in einem Abstand von 21 cm und in einem horizontalen Neigungswinkel von 70° (Figur 1). Die Außenseite wurde per Hand mittels Auf- und Abbewegungen senkrecht zur Zylinderwand und gleichzeitiger Drehung des Tisches beschichtet.

Um die Sinterdichte der entsprechenden Schichten zu bestimmen, wurde nach dem eigentlichen Sinterschritt die Masse, Dicke und Fläche der so entstandenen Schicht bestimmt, aus der Dicke und der Fläche das Schichtvolumen und aus Volumen und Masse die Sinterdichte berechnet und ins Verhältnis zur maximalen theoretischen Dichte von TaC (14.3 g/cm³) gesetzt. Für die Beschichtung aus Suspension 1 wurde eine Sinterdichte von 54 % erhalten und für die Beschichtung aus Suspension 2 betrug die Sinterdichte 56 %.

Über eine Querschnittsanalyse an den beschichteten und gesinterten Substraten konnte die Schichtdicke in beiden Fällen mittels Rasterelektronen-mikroskopie und Auflichtmikroskopie bestimmt werden und betrug 100 µm.

## Patentansprüche

1. Wässrige Suspension enthaltend mindestens einen Metallcarbid-Partikel und mindestens ein Dispergierungsmittel, wobei der Anteil des mindestens einen Metallcarbid-Partikels im Bereich von 30 bis 95 Gew.-% bezogen auf das Gesamtgewicht der Suspension liegt.

2. Wässrige Suspension nach Anspruch 1, **dadurch gekennzeichnet, dass**
der mindestens eine Metallcarbid-Partikel ausgewählt ist aus der Gruppe bestehend aus Titan-, Zirconium-, Hafnium-, Vanadium-, Niob-, Tantal-, Chrom-, Molybdän-, Wolfram-, Siliciumcarbid und Mischungen davon, wobei Tantalcarbid bevorzugt ist; und
wobei bevorzugt der mindestens eine Metallcarbid-Partikel eine mittlere Korngröße im Bereich von 0.05 bis 25 µm, besonders bevorzugt von 0.5 bis 5 µm und insbesondere bevorzugt von 1 bis 2 µm aufweist, und/oder,
der mindestens eine Metallcarbid-Partikel bevorzugt einen Anteil an Einzelelementverunreinigungen von < 300 ppm, besonders bevorzugt < 10 ppm und insbesondere bevorzugt von < 1 ppm aufweist; und/oder
das Dispergierungsmittel ausgewählt ist aus der Gruppe bestehend aus Polyacrylsäure, die bevorzugt ein zahlenmittleres Molekulargewicht im Bereich von 3000 bis 10000 g/mol und besonders bevorzugt von 4000 bis 6000 g/mol aufweist, Tetrabutylammoniumhydroxid und Mischungen davon.

3. Wässrige Suspension nach Anspruch 1 oder 2, **dadurch gekennzeichnet, dass**
diese zumindest einen Zusatzstoff ausgewählt aus der Gruppe bestehend aus Basen, insbesondere Natronlauge, Entschäumern, insbesondere Fettalkoholpolyalkylenglykolethern, Sinterhilfsmitteln, insbesondere Kobalt oder Silicium, und Mischungen davon, enthält.

4. Wässrige Suspension nach einem der vorhergehenden Ansprüche, **dadurch gekennzeichnet, dass**
der Anteil der Metallcarbid-Partikel im Bereich von 40 bis 90 Gew.-% und bevorzugt von 60 bis 85 Gew.-% bezogen auf das Gesamtgewicht der Suspension liegt; und/oder
der Anteil des Dispergierungsmittels im Bereich von 0,05 bis 5 Gew.-% und bevorzugt von 0,1 bis 2 Gew.-% bezogen auf das Gesamtgewicht der Suspension liegt; und/oder
der Anteil des mindestens einen Zusatzstoffes im Bereich von 0 bis 10 Gew.-% und bevorzugt von 0,5 bis 5 Gew.-% bezogen auf das Gesamtgewicht der Suspension liegt.

5. Verfahren zur Beschichtung eines Substrats umfassend die folgenden Schritte:
i) Bereitstellen eines Substrats;
ii) Bereitstellen einer wässrigen Suspension gemäß einem der Ansprüche 1 bis 4;
iii) Aufbringen der Suspension aus Schritt ii) auf die Oberfläche des Substrats aus Schritt i);
iv) Trocknung der aufgebrachten Suspension, wonach eine Beschichtung auf der Oberfläche des Substrats entsteht.

6. Verfahren gemäß Anspruch 5, **dadurch gekennzeichnet, dass**
das Substrat ausgewählt ist aus der Gruppe bestehend aus Graphit, Wärmeausdehnungskoeffizient angepassten Materialen, bevorzugt Graphit mit einem angepassten Wärmeausdehnungskoeffizient im Bereich von 6,5 bis 7,5 ^{∗} 10⁻⁶ K⁻¹ und Mischungen hiervon .

7. Verfahren gemäß einem der Ansprüche 5 oder 6, **dadurch gekennzeichnet, dass**
das Verfahren die folgenden weiteren Schritte enthält:
v) Vorbehandlung des in Schritt i) bereitgestellten Substrats vor Schritt iii), wobei die Vorbehandlung bevorzugt durch eine Maßnahme ausgewählt aus der Gruppe bestehend aus mechanischem Aufrauen der Oberfläche, thermischer Vorbehandlung der Oberfläche, chemischer Behandlung der Oberfläche und Mischungen davon, sowie anschließender Reinigung, insbesondere im Ultraschallbad, erfolgt;
vi) Sintern der nach Schritt iv) erhaltenen Beschichtung.

8. Verfahren gemäß einem der Ansprüche 5 bis 7, **dadurch gekennzeichnet, dass**
das Aufbringen der Suspension in Schritt iii) durch Pinseln, Tauchen, oder Sprühen erfolgt.

9. Verfahren gemäß einem der Ansprüche 5 bis 8, **dadurch gekennzeichnet, dass**
Schritt iv) bei einer Temperatur im Bereich von 100 bis 600°C, bevorzugt von 120 bis 550°C und besonders bevorzugt von 145 bis 455°C durchgeführt wird, wobei es bevorzugt ist, dass Schritt iv) über einen Zeitraum von 5 bis 40 Stunden und besonders bevorzugt von 20 bis 30 Stunden durchgeführt wird, insbesondere bevorzugt ist ein Trocknungsprozess iv) bei dem die Temperatur stufenweise erhöht wird, wobei folgende Temperatur- und Zeitintervalle am bevorzugtesten sind:
(1) 140 bis 160°C für 2,5 bis 3,5 Stunden; dann
(2) 180 bis 220°C für 1,5 bis 2,5 Stunden; dann
(3) 2 Stunden verweilen bei der Temperatur aus (2); dann
(4) 200 bis 250°C für 1,5 bis 2,5 Stunden; dann
(5) 310 bis 350°C für 4,5 bis 5,5 Stunden; dann
(6) 330 bis 350°C für 1,5 bis 2,5 Stunden; dann
(7) 2 Stunden verweilen bei der Temperatur aus (6); dann
(8) 380 bis 420°C für 3,5 bis 4,5 Stunden; dann
(9) 430 bis 470°C für 1,5 bis 2,5 Stunden;
und/oder
Schritt vi) bei einer Temperatur im Bereich von 2000 bis 2600°C, bevorzugt von 2100 bis 2500°C und besonders bevorzugt von 2200 bis 2300°C durchgeführt wird, wobei es bevorzugt ist, dass Schritt vi) über einen Zeitraum von 1 bis 10 Stunden und besonders bevorzugt von 3 bis 5 Stunden durchgeführt wird; und/oder
Schritt vi) bei einem Druck im Bereich von 500 bis 900 Torr, bevorzugt von 600 bis 800 Torr und insbesondere bevorzugt von 680 bis 720 Torr durchgeführt wird; und/oder
Schritt vi) unter Inertgas durchgeführt wird, wobei das Inertgas bevorzugt ausgewählt ist aus der Gruppe bestehend aus Helium, Argon, Stickstoff und Mischungen davon.

10. Verfahren gemäß einem der Ansprüche 5 bis 9, **dadurch gekennzeichnet, dass**
die Gründichte der Beschichtung nach Schritt iv) und/oder vor Schritt vi) mindestens 50 % und bevorzugt mindestens 60 % beträgt; und/oder
die Beschichtung nach Schritt iv) oder vi) weniger als 300 ppm und bevorzugt weniger als 1 ppm an Verunreinigungen enthält; und/oder
die Beschichtung nach Schritt iv) oder vi) eine offene Porosität von kleiner 5 % und bevorzugt von kleiner 1 % aufweist.

11. Verfahren gemäß einem der Ansprüche 5 bis 10, **dadurch gekennzeichnet, dass**
die Dicke der Beschichtung nach Schritt iv) oder vi) im Bereich von 20 bis 500 µm, bevorzugt von 50 bis 400 µm und besonders bevorzugt von 100 bis 300 µm liegt; und/oder
der pH-Wert der wässrigen Suspension vor Schritt iii) im Bereich von 5 bis 10 und bevorzugt von 7 bis 8, insbesondere für Polyacrylsäure als Dispergierungsmittel, liegt.

12. Beschichtetes Substrat herstellbar gemäß einem Verfahren nach einem der Ansprüche 5 bis 11.

13. Beschichtetes Substrat gemäß Anspruch 12, **dadurch gekennzeichnet, dass**
die Dicke der Beschichtung im Bereich von 20 bis 500 µm, bevorzugt von 50 bis 400 µm und besonders bevorzugt von 100 bis 300 µm liegt.

14. Verwendung eines beschichteten Substrats gemäß einem der Ansprüche 12 oder 13 als carbidischer Werkstoff.

15. Verwendung gemäß Anspruch 14 in Anwendungen für die Kristallzüchtung, insbesondere für Anwendungen in physikalischen Dampfphase-Verfahren, Epitaxie-Verfahren und für Tiegel.
